# EUROPÄISCHE PATENTANMELDUNG

(11) **EP 3 605 260 A1**
(43) Veröffentlichungstag der Anmeldung: **05.02.2020**
(21) Anmeldenummer: 18186341.6
(22) Anmeldetag: 30.07.2018
(51) Int. Cl.: G05D 1/02, G01C 21/32

(54) **VERFAHREN UND FAHRERLOSES TRANSPORTFAHRZEUG ZUR RECHNERGESTÜTZTEN BESTIMMUNG EINER QUALITÄT EINER KARTE**

(71) Anmelder: Siemens Aktiengesellschaft, 80333 München (DE)
(72) Erfinder: Meyer-Delius Di Vasto, Daniel, 81541 München (DE); Wösch, Thomas, 81241 München (DE)

(57) **Zusammenfassung**

Nachdem ein fahrerloses Transportfahrzeug eine Umgebung durchfahren und dabei reale Sensormessungen (RSM_1 ... RSM_N) aufgezeichnet hat, wird aus diesen mittels eines Kartierungsalgorithmus (KA) eine Karte (K) der Umgebung berechnet. Anhand der Karte werden zu den realen Sensormessungen korrespondierende virtuelle Sensormessungen (VSM_1 ... VSM_N) simuliert. Aus der Ähnlichkeit zwischen den virtuellen Sensormessungen und den korrespondierenden realen Sensormessungen kann nun automatisiert ein Qualitätswert (QW) für die Karte berechnet werden. Mit dem Qualitätswert wird ein quantitatives Maß geschaffen, welches es erlaubt, die Qualität der Karte in einem vollautomatisierten maschinellen Verfahren zu berechnen und zu evaluieren. Das fahrerlose Transportfahrzeug wird dadurch in die Lage versetzt, automatisiert unterschiedliche Karten zu generieren und die beste auszuwählen. Das Verfahren ermöglicht also eine vollautomatisierte Exploration unterschiedlicher Kartierungsalgorithmen und Parametrierungen. Weiterhin wird kein Expertenwissen benötigt, da das Verfahren unbeaufsichtigt abläuft. Die Arbeitszeit für die manuelle Suche nach dem besten Kartierungsalgorithmus wird eingespart; unter anderem ist es für den Menschen nicht mehr erforderlich, das Ergebnis der Ausführung jedes einzelnen Kartierungsalgorithmus abzuwarten und manuell auszuwerten.

## Beschreibung

Fahrerlose Transportfahrzeuge verfügen häufig über Sensoren wie Kameras oder Laserscanner, welche dem fahrerlosen Transportfahrzeug erlauben, autonom durch eine Umgebung zu navigieren. Zur Navigation nutzt das fahrerlose Transportfahrzeug eine Karte der Umgebung, in welcher sich das fahrerlose Transportfahrzeug selbst lokalisieren sowie seinen weiteren Fahrweg planen kann. Die Karte wird hierbei aus Messungen der Sensoren des fahrerlosen Transportfahrzeugs erstellt, welche während einer manuell gesteuerten Datenaufnahmefahrt durch die Umgebung aufgezeichnet werden.

Die eigentliche Kartenerstellung erfolgt häufig erst im Anschluss an die Datenaufnahmefahrt in einem Offline-Schritt, indem die Messungen der Sensoren durch einen Kartierungsalgorithmus verarbeitet werden. Zur Kartenerstellung ist eine Vielzahl von Kartierungsalgorithmen verfügbar, welche nicht nur die Messungen der Sensoren verarbeiten, sondern auch eine Anzahl von Parametern aufweisen, für die vor der Ausführung des Kartierungsalgorithmus Werte festgelegt werden müssen. Die Festlegung dieser Werte wird auch als Parametrieren bezeichnet; eine Parametrierung ist also eine Menge von Werten. Die Parametrierung hat große Auswirkung auf die Qualität der erzeugten Karte.

Bekannt ist, zur Erzeugung einer qualitativ hochwertigen Karte unterschiedliche Kartierungsalgorithmen sowie jeden Kartierungsalgorithmus mit unterschiedlichen Parametrierungen auszuführen. Anschließend werden die resultierenden Karten vom Menschen visuell geprüft. Für den Betrieb des fahrerlosen Transportfahrzeugs wird diejenige Karte gewählt, welche im Rahmen dieser visuellen Inspektion am besten geeignet erscheint.

Die Position und Orientierung, beispielsweise eines fahrerlosen Transportfahrzeugs oder eines Sensors, wird im Folgenden auch unter dem Begriff "Pose" zusammengefasst.

Durch die vorliegende Erfindung soll eine Alternative zum Stand der Technik geschaffen werden.

Diese Aufgabe wird erfindungsgemäß dadurch gelöst, dass zur rechnergestützten Bestimmung einer Qualität einer Karte ein fahrerloses Transportfahrzeug eine Umgebung durchfährt und dabei mehrere reale Sensormessungen aufzeichnet. Eine Recheneinheit berechnet aus den realen Sensormessungen mittels eines Kartierungsalgorithmus eine Karte der Umgebung.
Die Recheneinheit simuliert anhand der Karte zu den realen Sensormessungen korrespondierende virtuelle Sensormessungen. Für jede virtuelle Sensormessung berechnet die Recheneinheit einen Ähnlichkeitswert, welcher eine Ähnlichkeit zwischen der virtuellen Sensormessung und der korrespondierenden realen Sensormessung quantifiziert. Abschließend berechnet die Recheneinheit aus sämtlichen Ähnlichkeitswerten einen Qualitätswert, welcher eine Qualität der Karte quantifiziert.

Das fahrerlose Transportfahrzeug ist mit mindestens einem Sensor ausgerüstet und eingerichtet zur Durchquerung einer Umgebung und Aufzeichnung mehrerer realer Sensormessungen. Es umfasst ferner eine Recheneinheit, welche programmiert ist zur Berechnung einer Karte der Umgebung aus den realen Sensormessungen mittels eines Kartierungsalgorithmus, zur Simulation zu den realen Sensormessungen korrespondierender virtueller Sensormessungen anhand der Karte, zur Berechnung eines Ähnlichkeitswerts für jede virtuelle Sensormessung, welcher eine Ähnlichkeit zwischen der virtuellen Sensormessung und der korrespondierenden realen Sensormessung quantifiziert, und zur Berechnung eines Qualitätswerts aus sämtlichen Ähnlichkeitswerten, welcher eine Qualität der Karte quantifiziert.

Die im Folgenden genannten Vorteile müssen nicht notwendigerweise durch die Gegenstände der unabhängigen Patentansprüche erzielt werden. Vielmehr kann es sich hierbei auch um Vorteile handeln, welche lediglich durch einzelne Ausführungsformen, Varianten oder Weiterbildungen erzielt werden. Gleiches gilt für die nachfolgenden Erläuterungen.

Das fahrerlose Transportfahrzeug verfügt über Sensoren und nutzt seine realen Sensormessungen zur automatisierten Generierung einer Karte der Umgebung, sowie eine Simulation zur automatisierten Evaluierung dieser Karte.

Das Verfahren nutzt sowohl die realen Sensormessungen als auch simulierte virtuelle Sensormessungen zur Quantifizierung der Qualität der berechneten Karte. Der Qualitätswert erlaubt es als numerisches Maß, die Parametrierung des Kartierungsalgorithmus zu automatisieren sowie unterschiedliche Kartierungsalgorithmen zu explorieren, wie dies in den Weiterbildungen näher beschrieben wird.

Die virtuellen Sensormessungen werden anhand der Karte jeweils für die Pose des fahrerlosen Transportfahrzeugs in der Karte simuliert, an der die korrespondierende reale Sensormessung aufgezeichnet wurde, und erlauben Rückschlüsse auf die Güte der Karte. Denn die Berechnung des Ähnlichkeitswerts beruht auf der Erkenntnis, dass eine gute Karte die realen Sensormessungen besser abbildet als eine schlechte Karte. Somit müssen die virtuellen Sensormessungen, welche anhand einer guten Karte simuliert werden, eine höhere Ähnlichkeit mit den korrespondierenden realen Sensormessungen aufweisen als virtuelle Sensormessungen, welche anhand einer schlechten Karte simuliert werden. Wenn die Karte beispielsweise gegenüber der Realität gekrümmt, verdreht oder unproportional, oder in Einzelbereichen oder insgesamt inkonsistent ist, werden die simulierten virtuellen Sensormessungen nicht immer mit den korrespondierenden realen Sensormessungen übereinstimmen.

Mit dem Qualitätswert wird ein quantitatives Maß geschaffen, welches es erlaubt, die Qualität der Karte in einem vollautomatisierten maschinellen Verfahren zu berechnen und zu evaluieren. Das fahrerlose Transportfahrzeug wird dadurch in die Lage versetzt, automatisiert unterschiedliche Karten zu generieren und die beste auszuwählen.

Gemäß einer Ausführungsform berechnet die Recheneinheit aus den realen Sensormessungen mittels einer Mehrzahl von Kartierungsalgorithmen jeweils eine Karte der Umgebung, und für jede der Karten einen Qualitätswert.

In einer Weiterbildung führt die Recheneinheit den Kartierungsalgorithmus mit unterschiedlichen Parametrierungen aus und berechnet dabei aus den realen Sensormessungen jeweils eine Karte der Umgebung. Weiterhin berechnet die Recheneinheit für jede der Karten einen Qualitätswert.

Gemäß einer Ausführungsform führt die Recheneinheit eine Mehrzahl von Kartierungsalgorithmen mit jeweils unterschiedlichen Parametrierungen aus und berechnet dabei aus den realen Sensormessungen jeweils eine Karte der Umgebung. Weiterhin berechnet die Recheneinheit für jede der Karten einen Qualitätswert.

Diese Ausführungsformen und Weiterbildungen ermöglichen eine vollautomatisierte Exploration unterschiedlicher Kartierungsalgorithmen und Parametrierungen sowie die automatisierte Bestimmung der besten Karte. Weiterhin wird kein Expertenwissen benötigt, da das Verfahren unbeaufsichtigt abläuft. Unterschiedliche Kartierungsalgorithmen werden erprobt, wobei diese unterschiedliche Parameter in sehr großer Zahl haben können, zwischen denen komplexe Abhängigkeiten bestehen. Die optimale Parametrierung hängt häufig von den realen Sensormessungen ab.

Die Arbeitszeit für die manuelle Suche nach dem besten Kartierungsalgorithmus wird eingespart; unter anderem ist es für den Menschen nicht mehr erforderlich, das Ergebnis der Ausführung jedes einzelnen Kartierungsalgorithmus abzuwarten und manuell auszuwerten. Der Vorgang wird zusätzlich beschleunigt, wenn die Berechnungen von einer leistungsstarken Hardware, etwa einer Cloud-Infrastruktur, durchgeführt werden.

In einer Weiterbildung exploriert und/oder optimiert die Recheneinheit die Parametrierung des Kartierungsalgorithmus unter Beobachtung des Qualitätswertes für die gleichen realen Sensormessungen mittels eines Optimierungsverfahrens.

Gemäß einer Ausführungsform wählt die Recheneinheit die Karte mit dem höchsten Qualitätswert für einen Betrieb des fahrerlosen Transportfahrzeugs aus.

Auf dem computerlesbaren Datenträger ist ein Computerprogramm gespeichert, welches das Verfahren ausführt, wenn es in einem Prozessor abgearbeitet wird.

Das Computerprogramm wird in einem Prozessor abgearbeitet und führt dabei das Verfahren aus.

Im Folgenden werden Ausführungsbeispiele der Erfindung anhand von Figuren näher erläutert. In den Figuren sind gleiche oder funktionsgleiche Elemente mit denselben Bezugszeichen versehen, sofern nichts anderes angegeben ist. Es zeigen:
- Fig. 1: ein Ablaufdiagramm zur rechnergestützten Bestimmung und Optimierung einer Qualität einer Karte K eines fahrerlosen Transportfahrzeugs,
- Fig. 2: ein fahrerloses Transportfahrzeug FTF bei der Fahrt durch eine Umgebung U, bei der reale Sensormessungen RSM aufgezeichnet werden,
- Fig. 3: eine virtuelle Sensormessung VSM, welche anhand einer Karte K berechnet wird, und
- Fig. 4: eine überlappende Darstellung der virtuellen Sensormessung VSM mit der Umgebung U.

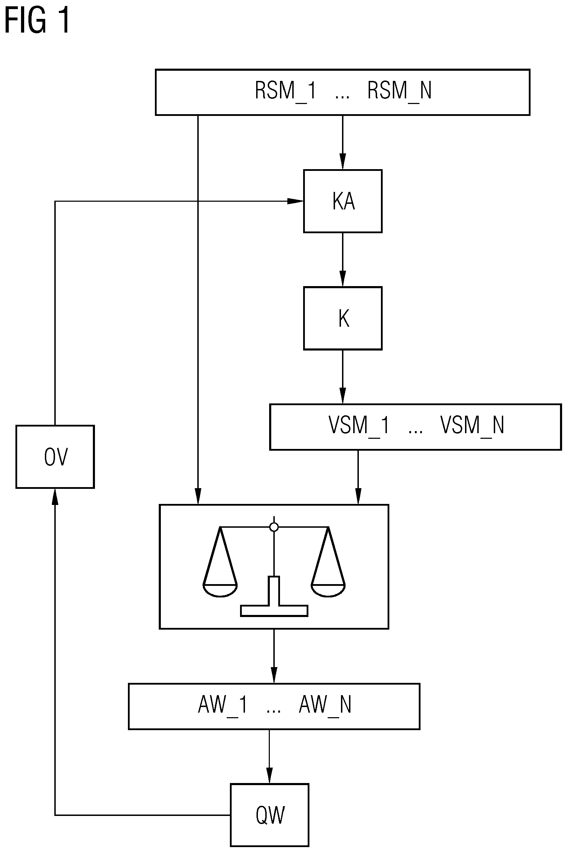

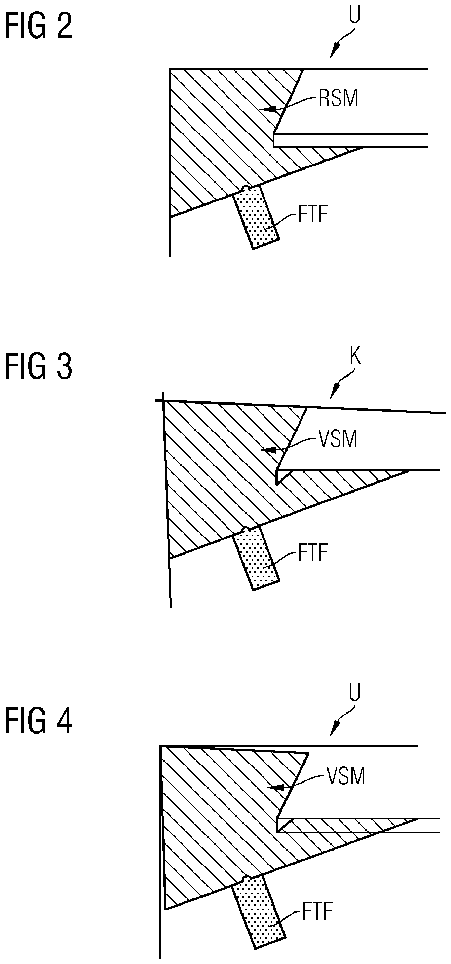

Figur 1 zeigt ein Ablaufdiagramm zur rechnergestützten Bestimmung und Optimierung einer Qualität einer Karte. Ein fahrerloses Transportfahrzeug durchfährt zunächst eine Umgebung, wie dies zu Figur 2 weiter unten erläutert wird, und zeichnet dabei mehrere reale Sensormessungen RSM_1 ... RSM_N auf. Aus diesen berechnet eine Recheneinheit mittels eines Kartierungsalgorithmus KA eine Karte K der Umgebung. Die Recheneinheit simuliert anhand der Karte K zu den realen Sensormessungen RSM_1 ... RSM_N korrespondierende virtuelle Sensormessungen VSM_1 ... VSM_N. Für jede virtuelle Sensormessung VSM_1 ... VSM_N berechnet die Recheneinheit einen Ähnlichkeitswert AM_1 ... AW_N, welcher eine Ähnlichkeit zwischen der virtuellen Sensormessung VSM_1 ... VSM_N und der korrespondierenden realen Sensormessung RSM_1 ... RSM_N quantifiziert. Abschließend berechnet die Recheneinheit aus sämtlichen Ähnlichkeitswerten AW_1 ... AW_N einen Qualitätswert QW, welcher eine Qualität der Karte K quantifiziert.

Der Kartierungsalgorithmus KA kann hierbei rechnergestützt und automatisiert aus einer Liste von Kartierungsalgorithmen gewählt werden. So kann der Qualitätswert QW auch für unterschiedliche Kartierungsalgorithmen berechnet werden, wodurch sich der am besten geeignete Kartierungsalgorithmus bestimmen lässt.

Nach der Auswahl des Kartierungsalgorithmus KA wird eine Parametrierung generiert, also eine Menge von Werten für die Parameter des Kartierungsalgorithmus KA. Hierbei kann auch für unterschiedliche Parametrierungen jeweils ein Qualitätswert berechnet werden, wodurch die am besten geeignete Parametrierung bestimmt werden kann.

Auf diese Weise kann im Rahmen eines Optimierungsverfahren OV der beste Kartierungsalgorithmus KA und die beste Parametrierung bestimmt werden, da diese den höchsten Qualitätswert QW erzielen. Das Optimierungsverfahren kann so lange iteriert werden, bis ein vorgegebenes Abbruchkriterium erreicht wird. Danach wird die Karte gewählt, welche den höchsten Qualitätswert erzielt hat. Sämtliche dieser Schritte können rechnergestützt und vollautomatisch ablaufen.

Beispielsweise werden alle Kartierungsalgorithmen durchprobiert, die für die vorliegenden realen Sensormessungen RSM_1 ... RSM_N, beispielsweise Laserscans oder Kamerabilder, geeignet sind.

Das Abbruchkriterium kann beispielsweise darin bestehen, dass keine weiteren Parametrierungen für den gewählten Kartierungsalgorithmus generiert werden können, dass ein vorgegebener Zeitraum ausgeschöpft wurde, dass eine vorgegebene Anzahl von Berechnungen durchgeführt wurde, oder dass ein vorgegebener Schwellwert für den Qualitätswert QW erreicht wurde.

Zur Generierung neuer Parametrierungen kann der Parameterraum beispielsweise diskretisiert und systematisch exploriert werden. Alternativ kann ein probabilistischer Stichprobenbasierter Ansatz verfolgt werden.

Zur Berechnung des Qualitätswerts QW wird mit den Ähnlichkeitswerten AW_1 ... AW_N jeweils ein numerischer Wert berechnet, welcher eine Ähnlichkeit zwischen einer virtuellen Sensormessung VSM_1 ... VSM_N und einer korrespondierenden realen Sensormessung RSM_1 ... RSM_N quantifiziert. Wenn das Paar aus virtueller und realer Sensormessung eine hohe Ähnlichkeit aufweist, fällt der Ähnlichkeitswert AW_1 ... AW_N größer aus. Der Qualitätswert QW kann beispielsweise aus der Summe der Ähnlichkeitswerte AW_1 ... AW_N berechnet werden.

Die Recheneinheit simuliert anhand der Karte K für jede reale Sensormessung RSM_1 ... RSM_N eine korrespondierende virtuelle Sensormessung VSM_1 ... VSM_N. Diese beschreibt anhand der Karte K und der Position des fahrerlosen Transportfahrzeugs in der Karte K, welche Sensormessung anhand der Informationen in der Karte K zu erwarten wäre. Hierbei kann auch ein Sensormodell genutzt werden, welches die Simulation von Sensormessungen für diesen Sensortyp unterstützt.

Im Rahmen des Kartierungsalgorithmus KA wird für jede reale Sensormessung RSM_1 ... RSM_N die Pose des fahrerlosen Transportfahrzeugs in der Karte K automatisch mitbestimmt, von der aus die reale Sensormessung RSM_1 ... RSM_N durchgeführt wurde. Die Pose kann also unmittelbar genutzt werden, um die korrespondierende virtuelle Sensormessung VSM_1 ... VSM_N allein anhand der in der Karte K enthaltenen Informationen zu simulieren.

Das Optimierungsverfahren OV läuft hierbei auf einer Ebene ab, welche den einzelnen Kartierungsalgorithmen bzw. deren Parametrierungen übergeordnet ist, da mit dem Qualitätswert QW jeweils die Karte K, also das Endergebnis des Kartierungsalgorithmus KA evaluiert wird. Das Optimierungsverfahren OV wählt für ein und dieselben realen Sensormessungen RSM_1 ... RSM_N unterschiedliche Kartierungsalgorithmen bzw. unterschiedliche Parametrierungen zur Erstellung der Karte K und exploriert, welche Qualitätswerte jeweils erzielt werden. So kann das Optimierungsverfahren OV beispielsweise beobachten, ob inkrementelle Änderungen der Parametrierung den Qualitätswert QW der erzeugten Karte K verbessern oder verschlechtern, bis ein lokales Optimum erreicht wird. Weiterhin kann das Optimierungsverfahren OV auch größere zufällige Anpassungen an der Parametrierung vornehmen, um zu testen, ob noch ein besseres lokales Optimum gefunden werden kann.

Figur 2 zeigt ein fahrerloses Transportfahrzeug FTF bei einer Datenaufnahmefahrt durch eine Umgebung U, bei der reale Sensormessungen RSM aufgezeichnet werden. Hierzu wird beispielsweise ein 2D- oder 3D-Laserscanner eingesetzt.

Figur 3 zeigt eine virtuelle Sensormessung VSM, welche aus einer Karte K berechnet wird. Die Karte K bildet die Umgebung U aus Figur 2 jedoch nicht richtig ab. Die virtuelle Sensormessung VSM, welche anhand der Karte K simuliert wird, weicht daher von der realen Sensormessung RSM aus Figur 2 ab.

Figur 4 zeigt eine überlappende Darstellung der virtuellen Sensormessung VSM aus Figur 3 mit der Umgebung U aus Figur 2. Teile der virtuellen Sensormessung VSM korrespondieren nur unzureichend mit der Umgebung U. Der Ähnlichkeitswert, welcher für die virtuelle Sensormessung VSM aus Figur 3 und die korrespondierende reale Sensormessung RSM aus Figur 2 berechnet wird, fällt entsprechend gering aus.

Die beschriebenen Algorithmen und Rechenschritte können beispielsweise in Recheneinheiten des fahrerlosen Transportfahrzeugs, auf Servern, in speicherprogrammierbaren lokalen Steuerungen oder in einer Cloud ausgeführt werden.

Die konkrete Ausgestaltung der Algorithmen und Berechnungen hängt von der Sensortechnologie des fahrerlosen Transportfahrzeugs ab. Die Sensoren können die Umgebung beispielsweise zweidimensional oder dreidimensional, mit Kamerabildern, Ultraschall und/oder einer Laserentfernungsmessung abtasten. Für die unterschiedlichen Sensortechnologien sind aus dem Stand der Technik zahlreiche Algorithmen bekannt, mit denen die einzelnen Berechnungsschritte durchgeführt werden können.

Obwohl die Erfindung durch die Ausführungsbeispiele im Detail illustriert und beschrieben wurde, ist sie nicht durch die offenbarten Beispiele eingeschränkt. Andere Variationen können vom Fachmann hieraus abgeleitet werden, ohne den Schutzumfang der Erfindung zu verlassen. Die beschriebenen Ausführungsbeispiele, Varianten, Ausführungsformen und Weiterbildungen können auch frei miteinander kombiniert werden.

## Patentansprüche

1. Verfahren zur rechnergestützten Bestimmung einer Qualität einer Karte,
- bei dem ein fahrerloses Transportfahrzeug (FTF) eine Umgebung (U) durchfährt und dabei mehrere reale Sensormessungen (RSM_1 ... RSM_N) aufzeichnet,
- bei dem eine Recheneinheit aus den realen Sensormessungen mittels eines Kartierungsalgorithmus (KA) eine Karte (K) der Umgebung berechnet,
- bei dem die Recheneinheit anhand der Karte zu den realen Sensormessungen korrespondierende virtuelle Sensormessungen (VSM_1 ... VSM_N) simuliert,
- bei dem die Recheneinheit für jede virtuelle Sensormessung einen Ähnlichkeitswert (AW_1 ... AW_N) berechnet, welcher eine Ähnlichkeit zwischen der virtuellen Sensormessung und der korrespondierenden realen Sensormessung quantifiziert, und
- bei dem die Recheneinheit aus sämtlichen Ähnlichkeitswerten einen Qualitätswert (QW) berechnet, welcher eine Qualität der Karte quantifiziert.

2. Verfahren nach Anspruch 1,
- bei dem die Recheneinheit aus den realen Sensormessungen mittels einer Mehrzahl von Kartierungsalgorithmen jeweils eine Karte der Umgebung berechnet, und
- bei dem die Recheneinheit für jede der Karten einen Qualitätswert berechnet.

3. Verfahren nach Anspruch 1,
- bei dem die Recheneinheit den Kartierungsalgorithmus mit unterschiedlichen Parametrierungen ausführt und dabei aus den realen Sensormessungen jeweils eine Karte der Umgebung berechnet, und
- bei dem die Recheneinheit für jede der Karten einen Qualitätswert berechnet.

4. Verfahren nach Anspruch 1,
- bei dem die Recheneinheit eine Mehrzahl von Kartierungsalgorithmen mit jeweils unterschiedlichen Parametrierungen ausführt und dabei aus den realen Sensormessungen jeweils eine Karte der Umgebung berechnet, und
- bei dem die Recheneinheit für jede der Karten einen Qualitätswert berechnet.

5. Verfahren nach Anspruch 3 oder 4,
- bei dem die Recheneinheit die Parametrierung des Kartierungsalgorithmus unter Beobachtung des Qualitätswertes für die gleichen realen Sensormessungen mittels eines Optimierungsverfahrens (OV) exploriert und/oder optimiert.

6. Verfahren nach einem der Ansprüche 2 bis 5,
- bei dem die Recheneinheit die Karte mit dem höchsten Qualitätswert für einen Betrieb des fahrerlosen Transportfahrzeugs auswählt.

7. Fahrerloses Transportfahrzeug (FTF),
- ausgerüstet mit mindestens einem Sensor,
- eingerichtet zur Durchquerung einer Umgebung (U) und Aufzeichnung mehrerer realer Sensormessungen (RSM_1 ... RSM_N), und
- mit einer Recheneinheit (RE), programmiert zur
- Berechnung einer Karte (K) der Umgebung aus den realen Sensormessungen mittels eines Kartierungsalgorithmus (KA),
- Simulation zu den realen Sensormessungen korrespondierender virtueller Sensormessungen (VSM_1 ... VSM_N) anhand der Karte,
- Berechnung eines Ähnlichkeitswerts (AW_1 ... AW_N) für jede virtuelle Sensormessung, welcher eine Ähnlichkeit zwischen der virtuellen Sensormessung und der korrespondierenden realen Sensormessung quantifiziert, und
- Berechnung eines Qualitätswerts (QW) aus sämtlichen Ähnlichkeitswerten, welcher eine Qualität der Karte quantifiziert.

8. Computerlesbarer Datenträger,
- auf dem ein Computerprogramm gespeichert ist, welches das Verfahren nach einem der Ansprüche 1 bis 6 ausführt, wenn es in einem Prozessor abgearbeitet wird.

9. Computerprogramm,
- welches in einem Prozessor abgearbeitet wird und dabei das Verfahren nach einem der Ansprüche 1 bis 6 ausführt.
